# NEUE EUROPÄISCHE PATENTSCHRIFT

(11) **EP 2 708 380 B2**
(45) Veröffentlichungstag und Bekanntmachung des Hinweises auf die Entscheidung über den Einspruch: **04.10.2023**
(45) Hinweis auf die Patenterteilung: 27.02.2019
(21) Anmeldenummer: 13179378.8
(22) Anmeldetag: 06.08.2013
(51) Int. Cl.: B60C 9/00

(54) **Verstärkungscord für elastomere Erzeugnisse, insbesondere für einen Fahrzeugluftreifen, und Fahrzeugluftreifen**
Reinforcing cord for elastomer products, in particular for a pneumatic tyre for a vehicle, and pneumatic tyre for a vehicle
Cordon de renforcement pour produits en élastomère, en particulier pour un pneu de véhicule et pneu de véhicule

(30) Priorität: 12.09.2012 DE 102012108519
(43) Veröffentlichungstag der Anmeldung: 19.03.2014
(73) Patentinhaber: Continental Reifen Deutschland GmbH, 30165 Hannover (DE)
(72) Erfinder: Kramer, Thomas, 32049 Herford (DE); Reese, Wolfgang, 31228 Peine (DE); Justine, Carole, 31535 Scharrel (DE)
(74) Vertreter: Continental Corporation

(56) Entgegenhaltungen:
- WO-A1-02/50846
- WO-A1-2011/077346
- WO-A1-2012/024112
- WO-A1-2012/102778
- WO-A2-2010/101698
- DE-A1-102007 025 490
- DE-A1-102008 021 820
- DE-A1-102010 017 107
- JP-A- 2006 022 435
- JP-A- 2010 280 995
- JP-A- 2011 219 736
- "Toray Succeeds in Production of the World's First Fully Renewable, Biobased Polyethylene Terephthalate (PET) Fiber | TORAY", Toray.com GLOBAL - Innovation by Chemistry, 15. November 2011 (2011-11-15), XP55089600, Gefunden im Internet: URL:http://www.toray.com/news/fiber/nr1111 15.html [gefunden am 2013-11-21]

## Beschreibung

Die Erfindung betrifft einen Verstärkungscord für einen Fahrzeugluftreifen, bestehend aus wenigstens einem Garn, wobei wenigstens ein Garn aus dem Material Polyethylenterephthalat (PET) besteht.
Ferner betrifft die Erfindung einen Fahrzeugluftreifen, der zumindest einen erfindungsgemäßen Verstärkungscord enthält.
Der Gegenstand der Erfindung ist in den Ansprüchen definiert.

Verstärkungscorde als Festigkeitsträger für elastomere Erzeugnisse, insbesondere für Festigkeitsträgerlagen von Fahrzeugluftreifen, wie Karkasslage, Wulstverstärker, Gürtellage und Gürtelbandage, sind dem Fachmann in Aufbau und Material in verschiedensten Ausführungen bekannt. Die Verstärkungscorde werden während der Herstellung in eine Kautschukmischung eingebettet, um als gummierte Festigkeitsträgerlage im elastomeren Erzeugnis eingesetzt werden zu können.

Verstärkungscorde bestehen aus einem oder mehreren miteinander verdrehten Garnen. Dabei kann es sich bei zwei oder mehr Garnen um das gleiche Material handeln oder, wie im Fall der Hybridcorde, um wenigstens zwei verschiedene Garne.

Bisher werden in elastomeren Erzeugnissen, insbesondere in Karkasslagen, Wulstverstärkern, Gürteln oder Gürtelbandagen von Fahrzeugluftreifen, einerseits stofflich primär (unmittelbar) auf fossilen Rohstoffen - wie Erdöl - basierende textile Festigkeitsträger, wie beispielsweise PET (Polyethylenterephthalat), Aramid und Nylon oder Hybridcorde aus deren Garnen eingesetzt.
Andererseits ist es bekannt, nicht-erdölbasierte textile Festigkeitsträger aus Viskose, wie beispielsweise Rayon oder Lyocell einzusetzen.

Nachteilig an Naturfasern, also an nicht-erdölbasierten Materialien als Material für textile Festigkeitsträger ist, dass diese keine endlose Faserstruktur und eine stark schwankende Faserqualität aufweisen.

Zudem erschwert das fehlende Schrumpfverhalten die spezielle Anwendung von Rayon als Festigkeitsträger in der Gürtelbandage. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Die Entwicklung geht dahin, umweltfreundliche, ressourcenschonende, auf primäre fossile Rohstoffe verzichtende Elastomerprodukte, wie Fahrzeugluftreifen, zu entwickeln und einzusetzen, ohne Einbußen in der Haltbarkeit der daraus hergestellten Produkte hinnehmen zu müssen. So sind aus der DE 102010017107 A1 Hybridcorde für z.B. Karkasslagen und/oder Gürtelbandagen bekannt, die wenigstens aus einem Garn aus recyceltem PET bestehen.

Die WO 2011077346 A1 offenbart einen Fahrzeugreifen mit einer Karkasslage, die Multifilamentgarne aufweist, wobei eines der Garne ein PET-Garn sein kann.

In der WO 02/50846 A1 wird ein Fahrzeugreifen beschrieben, der organische Fasern aus Polyethylenterephthalat enthalten kann. Die Verwendung von PET in Verstärkungscorden, insbesondere für einen Fahrzeugluftreifen, welches vollständig oder zumindest teilweise aus nachwachsenden Rohstoffen hergestellt ist, wird in der D1 nicht beschrieben.

In dem Internetauftritt "Toray Succeeds in Production of the World's First Fully Renewable, Biobased Polyethylene Terephthalate (PET) Fiber", URL:http://www.toray.comlnews/filber/nr111115.html, wird offenbart, dass Polyesterfasern industriell vollständig aus erneuerbaren Biomasserohstoffen hergestellt werden können.

In der WO 2012024112 A1 wird ein Prozess zur Herstellung von Polystyrol und PET aus biologischen Rohstoffen offenbart.

Auch in der WO 2010101698 A2 wird ein Prozess zur Herstellung von PET aus biologischen Rohstoffen offenbart, und zwar insbesondere zur Herstellung von Getränkeflaschen.

Die WO 2012102778 A1 offenbart einen Behälter mit einem Verschluss und einem Etikett, wobei jede Komponente aus erneuerbaren und/oder recycelten Materialien hergestellt ist und insbesondere der Behälter oder das Etikett derartiges PET umfassen kann.

Der vorliegenden Erfindung liegt nun die Aufgabe zu Grunde, einen Verstärkungscord für einen Fahrzeugluftreifen, bestehend aus wenigstens einem Garn, wobei wenigstens ein Garn aus dem Material Polyethylenterephthalat (PET) besteht, bereitzustellen, der eine Alternative zu herkömmlichen Verstärkungscorden ist, aus umweltfreundlichen und ressourcenschonenden Materialien besteht und gleichzeitig nachhaltig produziert werden kann. Zudem soll der Verstärkungscord eine gleichbleibende Produktqualität aufweisen.

Die Aufgabe wird gelöst, indem das PET des Verstärkungscordes teilweise aus nachwachsenden Rohstoffen hergestellt ist, wie es in den Ansprüchen definiert ist. Im Rahmen dieser Erfindung werden die Bezeichnungen Garn aus PET und PET-Garn synonym verwendet. Das PET, das vollständig oder zumindest teilweise aus nachwachsenden Rohstoffen hergestellt ist, wird im Rahmen der Erfindung auch als "PET aus vollständig oder zumindest teilweise aus nachwachsenden Rohstoffen" bezeichnet.

Unter nachwachsenden Rohstoffen werden im Rahmen der Erfindung land- und forstwirtschaftliche Produkte verstanden, die vom Menschen zielgerichtet für weiterführende Anwendungszwecke außer für Nahrungs- oder Futtermittel angebaut und/oder verwendet werden. Unter nachwachsenden Rohstoffen werden daher nicht fossile Quellen, wie Erdöl, verstanden, die durch Abbau zugänglich sind. Der erfindungsgemäße Verstärkungscord kann jedoch PET enthalten, welches teilweise aus Monomeren hergestellt ist, die ursprünglich zum Zweck der Verwendung als Nahrungs- oder Futtermittel angebaut wurden, aber z.B. aufgrund einer Umverteilung von Rohstoffen nicht als Nahrungs- oder Futtermittel sondern als nachwachsende Rohstoffe für den Einsatz im Verstärkungscord dienen. Etwaige Flächenkonflikte beim Anbau von Rohstoffen sollen sich demnach nicht einschränkend auf die Materialien der vorliegenden Erfindung auswirken.

Dabei ist unter "PET aus vollständig oder zumindest teilweise aus nachwachsenden Rohstoffen hergestellt" zu verstehen, dass das PET - ungeachtet der Energiequelle bei der Herstellung - stofflich aus nachwachsenden Rohstoffen hergestellt ist.
PET, das vollständig oder zumindest teilweise aus nachwachsenden Rohstoffen besteht, wird nicht nur oder gar nicht (zu 0 Gew.-%) aus fossilen Rohstoffen wie Erdöl gewonnen.

Wie dem Fachmann bekannt ist, kann der Anteil der biobasierten Stoffe, also der Anteil aus nachwachsenden Rohstoffen, im PET aus nachwachsenden Rohstoffen gemäß der ASTM D 6866 (C-14-Methode) bestimmt werden.

Vorzugsweise werden nachwachsende Rohstoffe pflanzlicher Herkunft verwendet. So wird das eine dem PET zu Grunde liegende Monomer Ethylenglycol (MEG = Monoethylenglycol oder 1,2-Ethandiol) bevorzugt statt aus Erdöl aus nachwachsenden pflanzlichen Rohstoffen wie beispielsweise Zuckerrohr oder Melasse gewonnen. Das andere dem PET zu Grunde liegende Monomer Terephthalsäure wird bevorzugt statt aus Erdöl aus nachwachsenden pflanzlichen Rohstoffen wie beispielsweise Zitronenschalen gewonnen.
Das vollständig oder zumindest teilweise aus nachwachsenden Rohstoffen hergestellte PET kann dabei zusätzlich Verunreinigungen enthalten, wie organische Kohlenwasserstoffe, die auf die pflanzlichen Rohstoffe zurückzuführen sind. Es kann sich dabei z.B. um Saccharide oder Zitronensäure handeln.

Monoethylenglycol aus pflanzlichen Rohstoffen wird bereits kommerziell vertrieben. Dieses macht aufgrund seines Molekulargewichtes im PET einen Massenanteil von 32,2% aus. Das andere Monomer Terephthalsäure ist aufgrund seines Molekulargewichtes zu 67,8 Gew.-% in Polyethylenterephthalat enthalten. Bevorzugt werden beide Monomere aus nachwachsenden Rohstoffen erzeugt. Es ist aber auch denkbar, dass nur eines der Monomere aus nachwachsenden Rohstoffen erzeugt ist. Z.B. besteht ein PET, welches aus Monoethylenglycol aus rein pflanzlichen Rohstoffen und Terephthalsäure aus rein fossilen Rohstoffen hergestellt ist, zu 32,2 Gew.-% aus nachwachsenden Rohstoffen.
Des Weiteren ist es denkbar, dass eines der beiden Monomere oder beide Monomere als Gemisch vorliegen, wobei das oder die Monomer(e) dann teilweise aus nachwachsenden Rohstoffen und teilweise aus Erdöl stammt bzw. stammen.

Erfindungswesentlich ist, dass wenigstens ein PET-Garn des Verstärkungscordes teilweise aus nachwachsenden Rohstoffen besteht, wie es in den Ansprüchen definiert ist. Das PET kann grundsätzlich z.B. gemäß den folgenden Ausführungsformen zusammengesetzt sein.

In einer nicht erfindungsgemäßen Ausführungsform besteht das PET zu 10 bis 100 Gew.-%, bevorzugt zu 20 bis 100 Gew.-%, besonders bevorzugt zu 30 bis 100 Gew.-%, aus nachwachsenden Rohstoffen, wobei die übrigen Gew.-%, die nicht PET aus vollständig oder zumindest teilweise nachwachsenden Rohstoffen sind, bei 100 Gew.-% PET unmittelbar aus Erdöl erzeugt sind.
Es ist dabei z.B. denkbar, dass das PET zu 32,2 Gew.-% aus nachwachsenden Rohstoffen und zu 67,8 Gew.-% aus erdölbasierten Rohstoffen besteht.

In einer weiteren nicht erfindungsgemäßen Ausführungsform ist das PET zu 10 bis 99 Gew.-%, bevorzugt zu 20 bis 99 Gew.-%, besonders bevorzugt zu 30 bis 99 Gew.-%, aus nachwachsenden Rohstoffen und zu 1 bis 90 Gew.-%, bevorzugt zu 1 bis 80 Gew.-%, besonders bevorzugt zu 1 bis 70 Gew.-% aus recyceltem PET hergestellt.

In der erfindungsgemäßen Ausführungsform der vorliegenden Erfindung ist das PET zu wenigstens 10 bis 98 Gew.-%, bevorzugt zu 20 bis 98 Gew.-%, besonders bevorzugt zu 30 bis 98 Gew.-% aus nachwachsenden Rohstoffen und zu 1 bis 70 Gew.-%, bevorzugt zu 10 bis 60 Gew.-%, besonders bevorzugt zu 20 bis 60 Gew.-% aus recyceltem PET und zu 1 bis 70 Gew.-%, bevorzugt 1 bis 50 Gew.-%, besonders bevorzugt zu 1 bis 40 Gew.-% unmittelbar stofflich aus Erdöl erzeugt, wobei die Massenanteile der PET aus diesen drei stofflichen Quellen 100 Gew.-% ergeben.

Um auf Erdöl als primäre stoffliche Quelle für PET ganz verzichten zu können, ist es eine weitere nicht erfindungsgemäße Ausführungsform, wenn das PET vollständig, also zu 100 Gew.-% aus nachwachsenden Rohstoffen besteht.

In den nachfolgenden Ausführungen wird "PET aus teilweise nachwachsenden Rohstoffen" auch kürzer mit "PET aus nachwachsenden Rohstoffen" bezeichnet. Es ist aber immer die oben genannte erfindungsgemäße Ausführungsformen mit Anteilen von erdölbasierten Rohstoffen und recyceltem PET eingeschlossen.

Die Verwendung von PET aus nachwachsenden Rohstoffen als Material für Festigkeitsträger von Elastomerprodukten ist nachhaltig, umweltfreundlich und ressourcenschonend. Zudem weist teilweise aus nachwachsenden Rohstoffen erzeugtes PET ebenfalls wie nur aus fossilen Rohstoffen gewonnenes PET eine gleichbleibende Qualität auf. Somit kann eine gleichbleibende Produktqualität sichergestellt werden.

Das wenigstens eine Garn aus PET aus nachwachsenden Rohstoffen des erfindungsgemäßen Verstärkungscordes ist mit 100 bis 600 t/m, bevorzugt mit 100 bis 550 t/m, besonders bevorzugt mit 200 bis 550 t/m verdreht.

Bevorzugt enthält der erfindungsgemäße Verstärkungscord wenigstens ein weiteres Garn, wobei das wenigstens eine Garn aus PET aus teilweise nachwachsenden Rohstoffen und das wenigstens eine weitere Garn mit 100 bis 600 t/m, bevorzugt mit 100 bis 550 t/m, besonders bevorzugt mit 200 bis 550 t/m, miteinander endverdreht sind.

In einer bevorzugten Ausführungsform der Erfindung, bestehen alle Garne des Cordes aus PET aus (teilweise) nachwachsenden Rohstoffen. Hierdurch kann ein üblicher PET-Verstärkungscord durch einen Verstärkungscord, welcher aus PET aus nachwachsenden Rohstoffen besteht, ersetzt werden. Je nach Wahl der Produktionsparameter weist dieser Verstärkungscord die gleichen Eigenschaften wie ein üblicher, das heißt wie ein stofflich unmittelbar aus Erdöl hergestellter PET-Verstärkungscord (regular bzw. HMLS high modulus low shrinkage) auf.

In einer weiteren bevorzugten Ausführungsform der Erfindung, ist der Verstärkungscord ein Hybridcord, bei dem wenigstens ein Garn des Cordes aus einem anderen Material als PET aus nachwachsenden Rohstoffen besteht, während das (die) übrige(n) Garn (e) aus PET aus nachwachsenden Rohstoffen bestehen. Der Verstärkungscord ist somit teilweise nachhaltig, umweltfreundlich und ressourcenschonend gestaltet und bietet als weiteren Vorteil die Möglichkeit der definierten Einstellung des Verstärkungscordes durch eine gezielte Materialauswahl des wenigstens einen weiteren Garnes.

Gemäß einer weiteren vorteilhaften Weiterbildung der Erfindung besteht der Verstärkungscord aus wenigstens einem Garn aus PET aus teilweise nachwachsenden Rohstoffen und wenigstens einem weiteren Garn aus einem nichtmetallischen Material. Das nichtmetallische Material ist ausgewählt aus der Gruppe enthaltend Polyamid- (PA) und/oder Aramid- und/oder Polyetherketon- (PEK-) und/oder Polyketon- (POK-) und/oder Polyethylennaphthalat- (PEN-) und/oder Rayon- und/oder Viskose- und/oder Naturfasern und/oder Glasfasern.
Der gesamte Hybridcord ist damit größtenteils oder ganz aus nicht-primär-erdölbasierten Materialien hergestellt und kann durch geeignete Materialauswahl der Garne definiert in seinen Eigenschaften eingestellt sein.

Um ein höheres Schrumpfverhalten des Verstärkungscordes zu erhalten, ist es gemäß einer vorteilhaften Weiterbildung der Erfindung bevorzugt, wenn er aus wenigstens einem Garn aus PET aus teilweise nachwachsenden Rohstoffen und wenigstens einem Garn aus Polyamid (PA) besteht. Dieses ist insbesondere für die Verwendung dieses Hybridcordes in der Gürtelbandage eines PKW-Reifens von Vorteil.

Besonders bevorzugt besteht das Garn aus PA aus PA6.6- und/oder PA6-Fasern und/oder PA10.10-Fasern und/oder PA10.12-Fasern.

Ganz besonders bevorzugt besteht das Garn aus PA aus PA6.6-Fasern.

Um einen höheren Modul des Verstärkungscordes zu erhalten, besteht er aus wenigstens einem Garn aus PET aus teilweise nachwachsenden Rohstoffen und wenigstens einem Garn aus Aramid. Dieses ist insbesondere für die Verwendung dieses Hybridcordes in der Gürtelbandage von UHP- (Ultra High Performance-) Reifen von Vorteil.

Um einen stabilen Verstärkungscord weitgehend ohne Schrumpf zu erhalten, besteht er aus wenigstens einem Garn aus PET aus teilweise nachwachsenden Rohstoffen und wenigstens einem Garn aus Rayon. Dieses ist insbesondere für die Verwendung dieses Hybridcordes in der Karkasse von PKW-Reifen und für das Hochgeschwindigkeits-Verhalten von PKW-Reifen von Vorteil.

Zweckmäßig ist es, wenn der Titer eines jeden Garnes des erfindungsgemäßen Verstärkungscordes zwischen 200 und 5000 dtex beträgt und wenn die Verdrehung der vorverdrehten Materialien zwischen 100 und 600 t/m beträgt.

Die eingesetzten Garne des Verstärkungscordes können dabei jeweils aus in S- oder Z-Richtung verdrehten Fasern aufgebaut sein. Somit kann z.B. das PET-Garn aus nachwachsenden Rohstoffen S- oder Z-verdreht sein.

Die verdrehten Garne werden erfindungsgemäß in S- oder Z-Richtung zu einem Verstärkungscord endverdreht. Vorteilhafterweise weisen die Garne eines Verstärkungscordes alle die gleiche Drehrichtung auf, d.h. sie sind entweder in S- oder Z-Richtung verdreht. In dieser vorteilhaften Variante weist der Verstärkungscord die den Garnen entgegengesetzte Drehrichtung auf. So kann z.B. ein S-verdrehtes PET-Garn aus nachwachsenden Rohstoffen mit einem S-verdrehten Aramidgarn in Z-Richtung zu einem Verstärkungscord endverdreht sein.

Der bevorzugte Anwendungsbereich des erfindungsgemäßen Verstärkungscordes ist die Karkasse von Fahrzeugluftreifen. PET aus nachwachsenden Rohstoffen zeigt wie PET aus erdölbasierten Rohstoffen Vorteile durch eine vergleichsweise hohe Festigkeit, sodass der erfindungsgemäße Verstärkungscord z.B. in der Karkasslage für eine ausreichende Dimensionsstabilität des Reifens sorgt.

Ein Verstärkungscord, der PET-Garne aus teilweise nachwachsenden Rohstoffen aufweist, eignet sich u.a. auch als Festigkeitsträger der Gürtelbandage, denn das PET aus teilweise nachwachsenden Rohstoffen weist ein im Vergleich zu Rayon vorteilhaftes gutes Schrumpfverhalten während der Vulkanisation auf und zeichnet sich durch eine geringe Wasseraufnahme aus.

Um eine zuverlässige Haftung von textilen Festigkeitsträgern zum Gummi zu gewährleisten, ist es zweckmäßig, den erfindungsgemäßen Verstärkungscord mit einer Haftimprägnierung, z.B. mit einem RFL-Dip im 1- oder 2-Bad-Verfahren, zu versehen.

Die Erfindung betrifft auch einen Fahrzeugluftreifen, der zumindest einen erfindungsgemäßen Verstärkungscord enthält. Bevorzugt enthält der Fahrzeugluftreifen den Verstärkungscord in der Karkasslage und/oder in wenigstens einer Gürtellage und/oder als Wulstverstärker und/oder in der Gürtelbandage.
Besonders bevorzugt enthält der Fahrzeugluftreifen den Verstärkungscord in der Karkasslage.

## Patentansprüche

1. Verstärkungscord für einen Fahrzeugluftreifen, bestehend aus wenigstens einem Garn, wobei wenigstens ein Garn aus dem Material Polyethylenterephthalat (PET) besteht, **dadurch gekennzeichnet, dass**
das PET teilweise aus nachwachsenden Rohstoffen hergestellt ist,
wobei das PET zu 10 bis 98 Gew.-% aus nachwachsenden Rohstoffen und zu 1 bis 70 Gew.-% aus Erdöl und zu 1 bis 70 Gew.-% aus recyceltem PET hergestellt ist.

2. Verstärkungscord nach Anspruch 1, **dadurch gekennzeichnet, dass** das Garn aus PET aus zumindest teilweise nachwachsenden Rohstoffen mit 100 bis 600 t/m verdreht ist.

3. Verstärkungscord nach einem der Ansprüche 1 oder 2, **dadurch gekennzeichnet, dass** er wenigstens ein weiteres Garn enthält, wobei das wenigstens eine Garn aus PET aus zumindest teilweise nachwachsenden Rohstoffen und das wenigstens eine weitere Garn mit 100 bis 600 tlm miteinander endverdreht sind.

4. Verstärkungscord nach einem der Ansprüche 1 bis 3, **dadurch gekennzeichnet, dass** alle Garne des Cordes aus PET aus zumindest teilweise nachwachsenden Rohstoffen bestehen.

5. Verstärkungscord nach einem der Ansprüche 1 bis 3, **dadurch gekennzeichnet, dass** er aus wenigstens einem Garn aus PET aus zumindest teilweise nachwachsenden Rohstoffen und wenigstens einem weiteren Garn aus einem nichtmetallischen Material besteht.

6. Verstärkungscord nach einem der Ansprüche 1 bis 5, **dadurch gekennzeichnet, dass** der Titer eines jeden Garnes zwischen 200 und 5000 dtex beträgt und dass die Verdrehung eines jeden Garnes zwischen 100 und 600 t/m beträgt.

7. Fahrzeugluftreifen, **dadurch gekennzeichnet, dass** dieser zumindest einen Verstärkungscord nach einem der Ansprüche 1 bis 6 in der Karkasslage und/oder in wenigstens einer Gürtellage und/oder als Wulstverstärker und/oder der Gürtelbandage enthält.

## Claims

1. Reinforcement cord for a pneumatic vehicle tire, consisting of at least one yarn, wherein at least one yarn consists of the material polyethylene terephthalate (PET), **characterized in that**
the PET is partly produced from renewable raw materials,
wherein the PET is 10 to 98 wt% produced from renewable raw materials and 1 to 70 wt% produced from petroleum and 1 to 70 wt% produced from recycled PET.

2. Reinforcement cord according to Claim 1, **characterized in that** the yarn of PET from at least partly renewable raw materials has a single twist of 100 to 600 t/m.

3. Reinforcement cord according to either of Claims 1 or 2, **characterized in that** it contains at least one further yarn, wherein the at least one yarn of PET from at least partly renewable raw materials and the at least one further yarn have a cable twist of 100 to 600 t/m.

4. Reinforcement cord according to any of Claims 1 to 3, **characterized in that** all yarns of the cord consist of PET from at least partly renewable raw materials.

5. Reinforcement cord according to any of Claims 1 to 3, **characterized in that** it consists of at least one yarn of PET from at least partly renewable raw materials and at least one further yarn of a nonmetallic material.

6. Reinforcement cord according to any of Claims 1 to 5, **characterized in that** the linear density of every yarn is between 200 and 5000 dtex and **in that** the single twist of every yarn is between 100 and 600 t/m.

7. Pneumatic vehicle tire, **characterized in that** it contains at least a reinforcement cord according to any of Claims 1 to 6 in the carcass ply and/or in at least one belt ply and/or as bead reinforcer and/or the belt bandage.

## Revendications

1. Câblé de renfort pour un pneumatique de véhicule, constitué d'au moins un fil, au moins un fil étant constitué du matériau poly(téréphtalate d'éthylène) (PET), **caractérisé en ce que**
le PET est préparé partiellement à partir de matières premières renouvelables,
le PET étant préparé à raison de 10 à 98 % en poids à partir de matières premières renouvelables et à raison de 1 à 70 % en poids à partir de pétrole et à raison de 1 à 70 % en poids à partir de PET recyclé.

2. Câblé de renfort selon la revendication 1, **caractérisé en ce que** le fil en PET obtenu au moins partiellement à partir de matières premières renouvelables est retordu à raison de 100 à 600 t/m.

3. Câblé de renfort selon l'une des revendications 1 ou 2, **caractérisé en ce qu'**il contient au moins un autre fil, le ou les fils en PET obtenu au moins partiellement à partir de matières premières renouvelables et le ou les autres fils ayant subi une torsion finale les uns avec les autres à raison de 100 à 600 t/m.

4. Câblé de renfort selon l'une des revendications 1 à 3, **caractérisé en ce que** tous les fils du câblé sont constitués de PET obtenu au moins partiellement à partir de matières premières renouvelables.

5. Câblé de renfort selon l'une des revendications 1 à 3, **caractérisé en ce qu'**il est constitué d'au moins un fil en PET obtenu au moins partiellement à partir de matières premières renouvelables et d'au moins un autre fil composé d'un matériau non métallique.

6. Câblé de renfort selon l'une des revendications 1 à 5, **caractérisé en ce que** le titre de chaque fil est compris entre 200 et 5 000 dtex, et **en ce que** la torsion de chaque fil est comprise entre 100 et 600 t/min.

7. Pneumatique de véhicule, **caractérisé en ce qu'**il contient au moins un câblé de renfort selon l'une des revendications 1 à 6 dans la nappe de carcasse et/ou dans au moins une nappe de ceinture et/ou en tant que renfort de talon et/ou dans le bandage de ceinture.
